# EUROPEAN PATENT APPLICATION

(11) **EP 2 073 553 A1**
(43) Date of publication of application: **24.06.2009**
(21) Application number: 07301730.3
(22) Date of filing: 21.12.2007
(51) Int. Cl.: H04N 7/26, H04N 7/50

(54) **Method and apparatus for performing de-blocking filtering of a video picture**

(71) Applicant: Thomson Licensing, 92100 Boulogne-Billancourt (FR)
(72) Inventor: Liu, Huaping, Beijing 100085 (CN); Bi, Jingqiong, Beijing 100085 (CN); Tang, Kai Fu, Beijing 100085 (CN); Xiao, Ai Ming, Beijing 100085 (CN)
(74) Representative: Rittner, Karsten

(57) **Abstract**

Common video standards use de-blocking filtering for reducing blocking distortion between the different blocks or macroblocks of a picture. De-blocking filtering is done horizontally within a line and vertically over two lines, or four lines for MBAFF mode. A method for performing de-blocking filtering of a video picture comprises steps of reading data of a current line into an internal memory, performing horizontal filtering on the current line data, writing the horizontally filtered current line data to an external memory, reading data of a next line into the internal memory, reading horizontally filtered data of the current line from the external memory into the internal memory, performing vertical filtering on the horizontally filtered current line data and the next line data, and writing the vertically and horizontally filtered current line data to the external memory. The invention is especially advantageous for HD resolution processing.

## Description

### Field of the invention

This invention relates to de-blocking filtering of a video picture.

### Background

Common video standards, such as H.264, AVS and VC-1, use de-blocking filtering for reducing blocking distortion between the different blocks or macroblocks (MB) of a picture. The de-blocking filter is applied after the inverse transform in the encoder, before reconstructing and storing a MB for future predictions, and in the decoder before reconstructing and displaying a MB. The filter smoothes block edges, thus improving the appearance of decoded frames. The filtered image is used for motion-compensated prediction of future frames. This can improve compression performance, because the filtered image is often a more faithful reproduction of the original frame than a blocky, unfiltered image.

De-blocking filtering is done horizontally within a line and vertically over two lines, or four lines for MBAFF mode (macroblock-adaptive frame/field mode). A de-blocking filter uses data of a current line and of a previous/upper line for non-MBAFF mode, or two previous/upper lines for MBAFF mode.

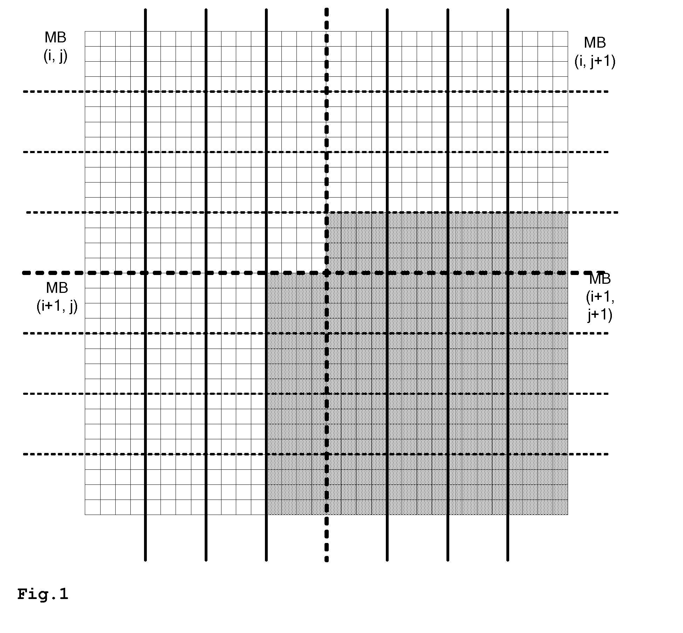

For example in H.264, the MB position is as shown in Fig.1. When de-blocking filtering the current MB (i+1,j+1), the filter needs the left four sub-blocks of the MB (i+1,j) and the upper four sub-blocks of the MB (i,j+1). The blocks are decoded in the following order: first within the line i, and then for the non-MBAFF decoding mode in the line i+1. In the case of MBAFF mode, block pairs of the two upper lines are used. Conventionally, the sub-blocks of the MBs in the upper line(s) and in the left column are stored in a memory, e.g. SRAM, which is either on-chip or external. For the MBAFF decoding mode, the sub-block data of the two upper lines are stored, and for the non-MBAFF decoding mode the sub-block data of only one upper line are stored.

Further, not only the pixel data of the sub-block, but also the motion vectors (MV), quantization parameters (QP), coding mode information (intra/inter) and other additional data are stored, which are called "neighbor information" in the following. Thus, the size of the SRAM is very big, especially for decoding high-definition (HD) videos. E.g. for decoding a 1920x1088 picture, the traditional approach will have to store about 1920*8*1.5 + 120*4*8= 26880 bytes for the upper MBs pixel data and neighbor information.

While on-chip memory is expensive and provides fast access, external memory is cheaper but provides very slow access. Some types of external memories, e.g. SDRAMs, provide a fairly fast average access time, but only when a large amount of data is read or written in a single access (burst mode).

### Summary of the Invention

The present invention provides a solution for reducing the amount of data that need to be stored on-chip for performing de-blocking filtering, while at the same time fast access is possible.

A method that solves the above-mentioned problems is disclosed in claim 1.

An apparatus that utilizes the method is disclosed in claim 9.

In principle, the data of a first line are written to an external memory after a first processing step of in-line processing for filtering vertical edges. Then, in the next line, the previous line data are dynamically re-loaded from the external memory, so that the second processing step can be done, which is the filtering of horizontal edges across lines and therefore double line processing. The external memory holds the pixels of each line first unfiltered, then partially de-blocked and finally fully de-blocked.

According to one aspect of the invention, a method for performing de-blocking filtering of a video picture comprises steps of
reading data of a current line into a first portion of an internal memory,
performing horizontal filtering on the current line data, writing the horizontally filtered current line data to an external memory via a first portion of a write buffer, reading data of a next line into the first portion of the internal memory,
reading horizontally filtered data of the current line from the external memory into a second portion of the internal memory,
performing vertical filtering on the horizontally filtered current line data and the next line data, and
writing the vertically and horizontally filtered current line data via a second portion of the write buffer to the external memory.

According to another aspect of the invention, an apparatus for performing de-blocking filtering of a video picture comprises
an internal memory,
an internal write buffer,
a filtering means,
an interface for writing data from said internal write buffer to an external memory and reading data from an external memory, and
a control unit suitable for making the apparatus perform the steps of
   reading data of a current line into a first portion of the internal memory,
   performing horizontal filtering on the current line data using said filtering means,
   writing the horizontally filtered current line data to a first portion of the internal write buffer,
   writing the data from the internal write buffer to an external memory via the external memory interface,
   reading data of a next line into the first portion of the internal memory,
   reading via the external memory interface horizontally filtered data of the current line into a second portion of the internal memory,
   performing vertical filtering on the (lower blocks of the) horizontally filtered current line data and the (upper blocks of the) next line data,
   writing the vertically and horizontally filtered current line data to a second portion of the write buffer, and writing the data from the internal write buffer to an external memory via the external memory interface.

Advantageous embodiments of the invention are disclosed in the dependent claims, the following description and the figures.

### Brief description of the drawings

Exemplary embodiments of the invention are described with reference to the accompanying drawings, which show in
Fig.1 the position of a current MB and its neighbors;
Fig.2 the data flow structure of the de-blocking process;
Fig.3 the principle of the used architecture;
Fig.4 a flow-chart for storing data into the external memory; and
Fig.5 a flow-chart for loading data from the external memory.

### Detailed description of the invention

An aspect of this invention is to store the upper MBs neighbor information and pixel data into an external memory. The latency of accessing data from the external memory is reduced by using a combination of internal and external memories, wherein the currently required data are stored in internal memories. Compared with known solutions, the decoding performance is thereby increased.

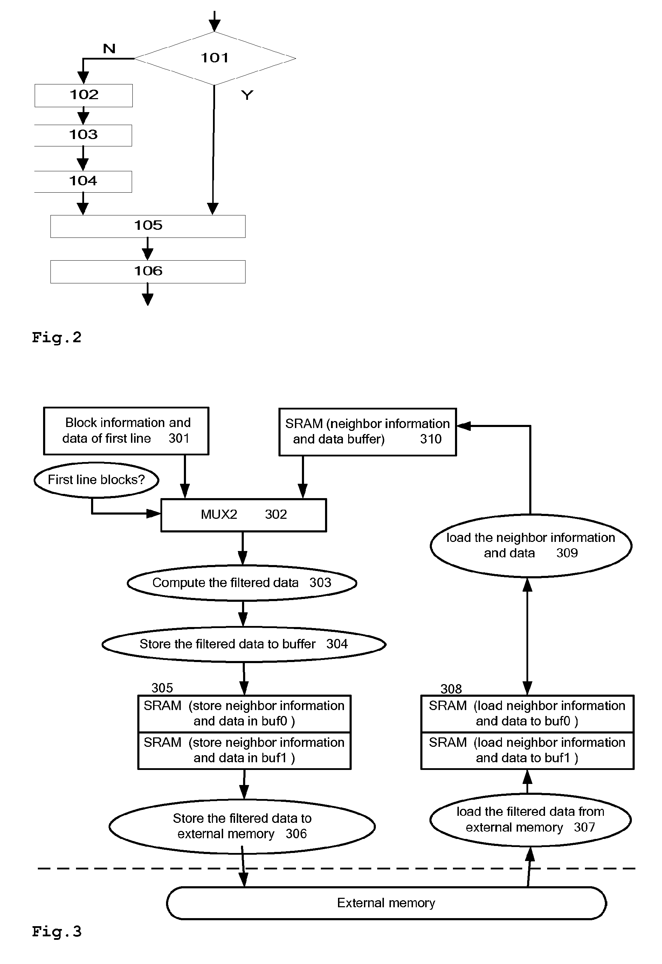

Fig.2 shows the data flow of processing the neighbor information and data. It can be divided into six steps:
1) Judging 101 whether the current block is on the first line. If yes, the data flow branches to the fourth step 105; if not, the second step 102 follows.
2) If the current block is not on the first line, the neighbor information and data are read 102 from the external memory.
3) The data read from the external memory are stored 103 into an on-chip buffer. The steps 1) - 3) are done well before the data are actually used for processing.
4) When the neighbor information and data are required for the de-blocking filter, they are fetched 104 from the on-chip buffer, which has much lower access time than the external memory.
5) The actual de-blocking of the pixels is performed 105 according to the relevant video standard.
6) After the de-blocking computation, the related neighbor information and the partially de-blocked pixels are written 106 to the external memory.

In more detail, the data of each line are used twice: once for horizontal filtering and once for vertical filtering. In between, the data are also stored into the external memory. This reduces the required size of on-chip memory. In principle, step 5) in the above flow comprises the following steps:
5a) The actual de-blocking of the pixels is performed in horizontal direction.
5b) The neighbor information and the partially de-blocked pixels are written to the external memory. The following steps are performed if the current block is not in the last line.
5c) In the next line, the neighbor information and the partially de-blocked pixels are read from the external memory into the internal buffer.
5d) When required for processing, the neighbor information and the partially de-blocked pixels are read from the internal buffer.
5e) The actual de-blocking of the pixels is performed in vertical direction. In this step, also the data of another block below the current block are available, and can be used for the vertical filtering.
5f) The neighbor information and the de-blocked pixels are written to the external memory.

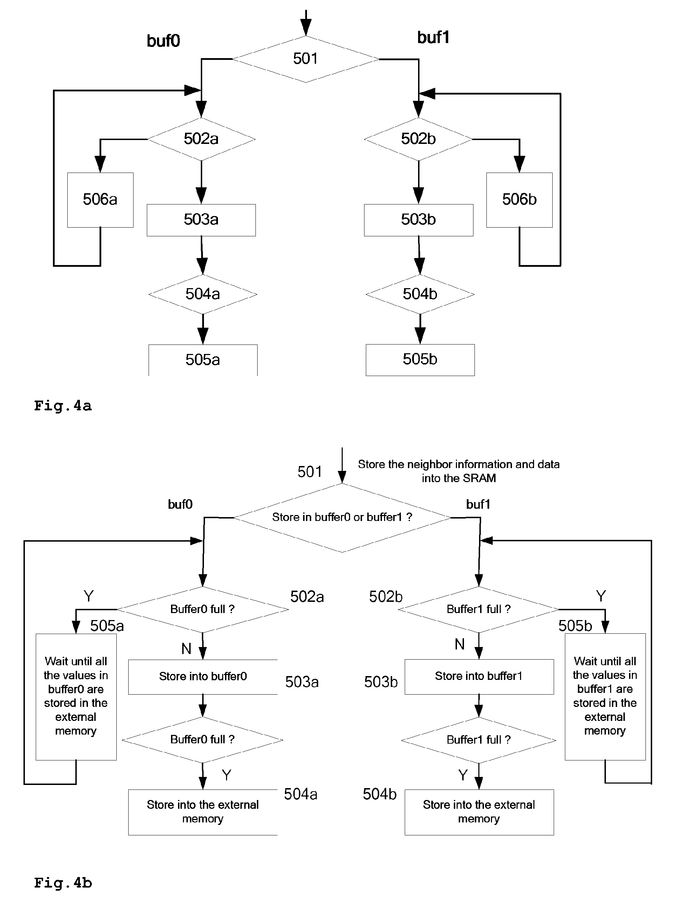

Fig.3 shows the principle of a module architecture suitable for implementation of the invention within a chip. An input multiplexer mux2 can select between two inputs 301,302 to the module. When the current MB is in the first line, the multiplexer selects data of the blocks of the first line; otherwise it gets the neighbor information and data (incl. the upper and the left neighbor sub-blocks) from an on-chip SRAM memory 310. Next, the selected information and data are filtered 303 according to the employed video standard. Then the current MBs position in the picture is determined and, based upon the position, the index or address for storing its data into an SRAM buffer 305 is computed. The procedure for storing data into the SRAM buffer 305 is described in Fig.4. Finally, when the SRAM buffer 305 has reached a pre-defined fill level, its contents is stored 306 to the external memory using burst mode.

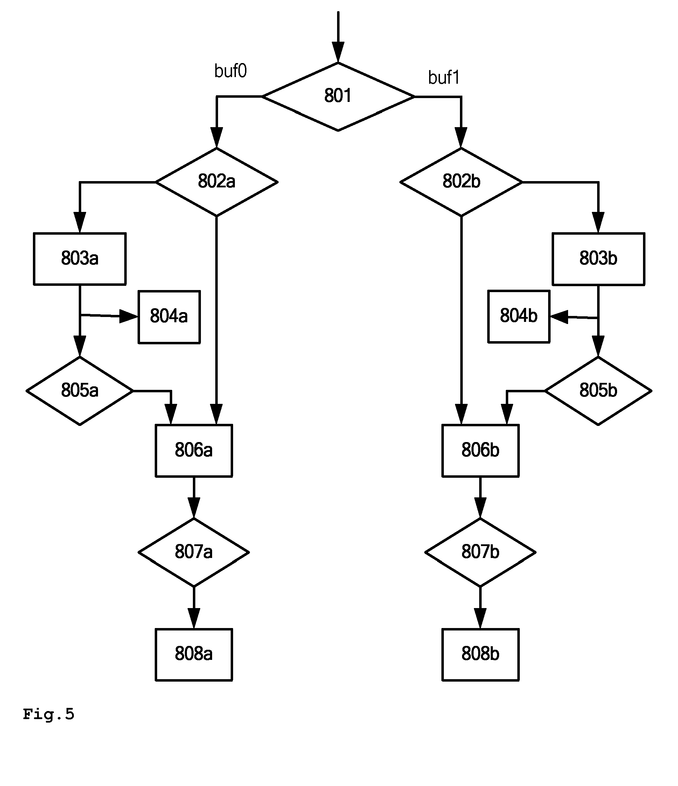

In addition, when the neighbor information and data that are required for filtering the current MB are not in the SRAM memory 310, they will be loaded 309 from a load buffer 308. Before loading data, the index or address for visiting the load buffer 308 is computed. Fig.5 shows the procedure for loading these data from the load buffer 308. The load buffer 308 is e.g. an on-chip SRAM that is filled with sections of a current and a previous line, or two current and two previous lines for MBAFF mode. A section comprises a number of MBs, such that the load buffer 308 needs not be re-loaded too often, e.g. 4-5 times per line depending on the access time of the external memory. Advantageously, the internal buffer memories need not store full lines of data, but only parts of a current and a previous line (or two of each for MBAFF mode). Substantially, the stored sections of the current and the previous line are vertically aligned, e.g. columns j,j+1,j+2,...,j+9 of a line i and same columns of the next line i+1 (columns and lines refer to MBs).

The storing of neighbor information and pixel data in the on-chip SRAM 305 in Fig.3 can consist of the steps shown in Fig 4. The physical buffer can be divided into two logical buffers buf0,buf1 for the current line and for the next line, as shown in Fig.3. This is advantageous because data for the current line and data for the next line are stored in different areas of the external memory. For MBAFF mode, either a third and fourth logical buffer are created or the data of two lines are stored into one logical buffer.

The first step 501 judges to which logical buffer the neighbor information and the pixel data should be stored, depending on the position of the current MB. After deciding the buffer, the second step 502a,502b checks whether the respective buffer is full or not. If the buffer is not full, all the data will be stored 503a,503b and this operation is finished. In the exceptional case that the buffer is full (e.g. because previous writing to the external memory was delayed), the data are buffered intermediately and the storing operation will wait 504a, 504b until all the data of the buffer are stored in the external memory. After storing the data into the buffer 503a,503b, the buffer will always be checked whether it is full, and if so, its data will be stored into the external memory 504a,504b before the next data arrive.

This two buffer architecture can "absorb" the long latency of visiting the external memory and make it transparent. In particular it is easier to store the blocks in the sequence of their processing, e.g. i-1,j / i,j / i-1,j+1 / i,j+1 (line#/column#) etc. As can be seen, this sequence contains blocks from different lines in an alternating manner (where blocks from the previous line are partially filtered and blocks from the current line are completely filtered), so that subsequent blocks need to be stored in different regions of the external memory, since the external memory is usually structured in lines. The invention has the advantage that the partially and finally de-blocked data can be stored to the external memory with a single request, for which the burst function of the external memory can be used. The accesses to the external memory can be adjusted such that accesses from the two buffers do not interfere. This can be achieved by selecting appropriate buffer sizes, depending on the access time of the external memory, and/or usage a schedule for accessing the external memory.

Similarly, the loading 309 of the neighbor information and pixel data from the load buffer 308, being an on-chip SRAM memory, can consist of several steps, as shown in Fig.5. Also the load buffer 308 can consist of e.g. two physical memories or one single physical memory that is divided into two or more logical buffers buf0,buf1, as described above for the SRAM buffer 305. The first step 801 of the load procedure judges from which of the buffers the neighbor information and the pixel data should be loaded, according to the position of the current MB. Data from the same line will be loaded from the same buffer. After the buffer is selected, the second step 802a,802b checks whether the required data are available and valid in the selected buffer. If the buffer has the valid data, the data are read from the buffer 803a,803b and returned 804a,804b. Then, this loading operation is finished.

Further, this operation determines 805a,805b whether the returned data is the last one of this load buffer, so that it is empty. If the buffer does not have the required valid data, or if the currently returned data is the last within this buffer, a request for fetching new data will be sent 806a,806b to the external memory. The request refers to data for several MBs, which makes good use of the external memory bandwidth. After the required data are returned 807a,807b from the external memory (this may require some wait cycles 807a,807b), they will be stored 808a,808b into the respective region of the load buffer 308. As with storing data, this two buffer architecture can hide the long latency of visiting the external memory, because also when loading data the burst function of the external memory can be used.

Exemplarily, the buffer size can be about 4KB (2KB for storing data and 2KB for loading data). Compared to conventional architectures with only internal memory, the memory size on-chip can be reduced significantly.

According to one aspect of the invention, a method for performing de-blocking filtering of a video picture comprises steps of reading data of a current line into a first portion of an internal memory, performing horizontal filtering on the current line data, writing the horizontally filtered current line data to an external memory via a first portion of a write buffer, reading data of a next line into the first portion of the internal memory, reading horizontally filtered data of the current line from the external memory into a second portion of the internal memory, performing vertical filtering on the horizontally filtered current line data and the next line data, and writing the vertically and horizontally filtered current line data via a second portion of the write buffer to the external memory.

In one embodiment, each access to the external memory refers to the data of a plurality of blocks.

In one embodiment, each access to the external memory refers to the data of 10-20 blocks.

In one embodiment, the steps of reading data from the external memory are done in advance according to a schedule, such that the data required for performing said filtering steps are available in said internal memory.

In one embodiment, the method further comprises steps of performing horizontal filtering on the next line data after said reading the data of the next line, and writing the horizontally filtered next line data via a first portion of a write buffer to the external memory.

In one embodiment, the method further comprises the steps of reading data of a third, previous line into a third portion of the internal memory, data of said next line into the first portion of the internal memory and horizontally filtered data of the current line into the second portion of the internal memory from the external memory, and performing said vertical filtering on the horizontally filtered current line data, the horizontally filtered previous line data and the next line data. The next line data in this embodiment actually consists of two lines, so that two current and two previous lines are available, which enables an implementation for MBAFF mode.

In one embodiment, the step of performing vertical filtering is only performed on the lower blocks of the horizontally filtered current line data and on the upper blocks of the next line data, and in the case of MBAFF on the lower blocks of the horizontally filtered previous line data.

In one embodiment, the current, next or previous line data comprise neighbor information, such as quantization parameter (QP), motion vectors (MV) and Intra/Inter coding information.

According to another aspect of the invention, an apparatus for performing de-blocking filtering of a video picture comprises an internal memory, an internal write buffer, a filtering means, an interface for writing data from said internal write buffer to an external memory and reading data from an external memory, and a control unit suitable for making the apparatus perform the steps of reading data of a current line into a first portion of the internal memory, performing horizontal filtering on the current line data using said filtering means, writing the horizontally filtered current line data to a first portion of the internal write buffer, writing the data from the internal write buffer to an external memory via the external memory interface, reading data of a next line into the first portion of the internal memory, reading via the external memory interface horizontally filtered data of the current line into a second portion of the internal memory, performing vertical filtering on the (usually lower blocks of the) horizontally filtered current line data and the (usually upper blocks of the) next line data, writing the vertically and horizontally filtered current line data to a second portion of the write buffer, and writing the data from the internal write buffer to an external memory via the external memory interface.

In further embodiments, the apparatus performs the additional steps of the above-mentioned corresponding method embodiments.

The invention is applicable in chip design for video decoding chips, and is especially advantageous for HD resolution processing.

It will be understood that the present invention has been described purely by way of example, and modifications of detail can be made without departing from the scope of the invention. Each feature disclosed in the description and (where appropriate) the claims and drawings may be provided independently or in any appropriate combination. Features may where appropriate be implemented in hardware, software, or a combination of the two. Connections such as external interfaces may, where applicable, be implemented as wireless connections or wired, not necessarily direct or dedicated connections. E.g. if the external memory is organized column-wise instead of line-wise, a swap of the filtering processes is advisable.

Reference numerals appearing in the claims are by way of illustration only and shall have no limiting effect on the scope of the claims.

## Claims

1. Method for performing de-blocking filtering of a video picture, comprising steps of
- receiving data of a current line and storing them into a first portion of an internal memory (308);
- performing horizontal filtering on the current line data;
- writing (503a) the horizontally filtered current line data to an external memory via a first portion of a write buffer (305);
- receiving data of a next line and storing them into the first portion of the internal memory (308);
- reading horizontally filtered data of the current line from the external memory and storing them into a second portion of the internal memory (308);
- performing vertical filtering on the horizontally filtered current line data and the next line data; and
- writing (503b) the vertically and horizontally filtered current line data via a second portion of the write buffer (305) to the external memory.

2. Method according to claim 1, wherein each access to the external memory refers to the data of a plurality of blocks.

3. Method according to claim 1, wherein each access to the external memory refers to the data of 10-20 blocks.

4. Method according to one of the claims 1-3, wherein said step of reading data from the external memory is done in advance according to a schedule, such that the data required for performing said filtering step is available in said internal memory.

5. Method according to one of the claims 1-4, further comprising steps of
- performing horizontal filtering on the next line data after said receiving the data of the next line; and
- writing (306) the horizontally filtered next line data via a first portion of a write buffer (305) to the external memory.

6. Method according to one of claims 1-5, further comprising the steps of
- reading data of at least a third, previous line into a third portion of the internal memory, data of said next line into the first portion of the internal memory and horizontally filtered data of the current line into the second portion of the internal memory from the external memory;
- performing said vertical filtering on the horizontally filtered current line data, the horizontally filtered previous line data and the next line data.

7. Method according to one of the claims 1-6, wherein the step of performing vertical filtering is only performed on the lower blocks of the horizontally filtered current line data and on the upper blocks of the next line data, and in the case of claim 6 on the lower blocks of the horizontally filtered previous line data.

8. Method according to one of the claims 1-7, wherein the current, next or previous line data comprise neighbor information (QP, MV, Intra/Inter coding information).

9. Apparatus for performing de-blocking filtering of a video picture, comprising
- an internal memory (308);
- an internal write buffer (305);
- a filtering means (303);
- an interface for writing data from said internal write buffer (305) to an external memory and reading (307) data from an external memory; and
- a control unit suitable for making the apparatus perform the steps of
- reading data of a current line into a first portion of the internal memory (308);
- performing horizontal filtering on the current line data using said filtering means;
- writing the horizontally filtered current line data to a first portion of the internal write buffer (305);
- writing the data from the internal write buffer to an external memory via the external memory interface;
- reading data of a next line into the first portion of the internal memory;
- reading (307) via the external memory interface horizontally filtered data of the current line into a second portion of the internal memory (308);
- performing vertical filtering on the horizontally filtered current line data and the next line data;
- writing (304) the vertically and horizontally filtered current line data to a second portion of the write buffer (305); and
- writing (306) the data from the internal write buffer to an external memory via the external memory interface.

10. Apparatus according to claim 9 performing said steps according to one of the claims 2-4, 7 or 8, or further performing steps according to claims 5 or 6.
